# EUROPÄISCHE PATENTSCHRIFT

(11) **EP 0 991 922 B1**
(45) Veröffentlichungstag und Bekanntmachung des Hinweises auf die Patenterteilung: **14.11.2001**
(21) Anmeldenummer: 98937483.0
(22) Anmeldetag: 15.06.1998
(51) Int. Cl.: G01F 11/02, G01F 11/08, G01F 15/12, A47L 15/44, D06F 39/02

(54) **KOMPAKTES FLÜSSIGKEITS-DOSIERGERÄT MIT VORRATSBEHÄLTER**
COMPACT LIQUID DOSING APPARATUS WITH A RESERVOIR
DOSEUR DE LIQUIDE COMPACT AVEC RESERVOIR

(30) Priorität: 24.06.1997 DE 19726707
(43) Veröffentlichungstag der Anmeldung: 12.04.2000
(73) Patentinhaber: HENKEL-ECOLAB GmbH & CO. OHG, 40589 Düsseldorf (DE)
(72) Erfinder: UHL, Stephan, D-42781 Haan (DE); SCHUSTER, Frank-Rainer, D-40699 Erkrath (DE); BUHRAU, Dieter, D-41542 Dormagen (DE); KREYER, Jürgen, D-40724 Hilden (DE); LOHWIESER, Heribert, D-83313 Siegsdorf (DE)
(74) Vertreter: Wacker, Manfred, Dr.
(86) Internationale Anmeldenummer: EP9803593
(87) Internationale Veröffentlichungsnummer: WO9859222

(56) Entgegenhaltungen:
- WO-A-95/23549
- DE-A- 3 614 621
- FR-A- 2 277 177
- US-A- 3 531 021
- US-A- 4 998 850

## Beschreibung

Die Erfindung betrifft ein Dosiergerät mit einem Behälter, der im oberen Bereich eine Einfüllöffnung für Nachfüllbeutel mit einer Flüssigkeit und im Bodenbereich eine Austrittsöffnung aufweist, über der eine Öffnungsvorrichtung für den Nachfüllbeutel angeordnet ist und von der eine Verbindung zu einer nachgeschalteten Pumpe besteht. Sie betrifft insbesondere ein Dosiergerät für chemische Reinigungs- und Reinigungshilfsmittel, für deren wirksamen Einsatz die Einhaltung vorgegebener Konzentrationen wichtig ist.

Im Hygienebereich werden die unterschiedlichsten Substanzen zur Reinigung und Konditionierung der Reinigungsbedingungen eingesetzt. Vielfach handelt es sich bei diesen Substanzen um chemische Produkte. Solche Substanzen werden fast immer in höheren Konzentrationen hergestellt und bevorratet. als sie für die Anwendung erforderlich oder sinnvoll sind. Sie müssen daher vor dem oder beim Einsatz in geeigneter Weise verdünnt werden. Um bei der Verdünnung die gewünschte Konzentration der Substanzen in der Lösung einhalten zu können. müssen diese Substanzen in der richtigen Menge zugeführt werden.

Besonders im gewerblichen Bereich bereitet es Schwierigkeiten, die Zugabe der Substanzen manuell zu handhaben. Einmal wäre dies mit einem erheblichen Arbeitsaufwand und Personaleinsatz verbunden. Zum anderen handelt es sich bei diesen Substanzen häufig um Stoffe, deren Berührung mit der menschlichen Haut zu Problemen führen können. Daher wird allgemein versucht, das entsprechende Handling zu mechanisieren und zu automatisieren.

Liegen die Substanzen in fester oder pulverförmiger Form vor, wird üblicherweise eine Lösungsflüssigkeit, beispielsweise Wasser, auf den Substanzvorrat gebracht, so daß eine gewisse Substanzmenge in Lösung geht und der Anwendung zugeführt werden kann. Der Nachteil bei dieser Vorgehensweise liegt unter anderem darin. daß hierbei die Konzentration der Substanzen in der Lösung sehr schwierig zu kontrollieren ist. Bei solchen Einspülgeräten ist es auch von Nachteil, daß die Dosiermenge mit wechselndem Wasserdruck schwankt und bei hohem Wasserdruck nur sehr schwierig darstellbar ist.

Liegen die Substanzen in flüssiger Form vor, so ist deren Konzentration meist hinreichend genau festgelegt. Es ist daher möglich, solche flüssige Substanzen nach dem Volumen zu dosieren, um eine exakte Konzentration der Substanz in der Lösung sicherzustellen. Bei solchen Dosiersystemen handelt es sich häufig um sehr aufwendige und kompliziert zu handhabende Anordnungen. Die verschiedenen Aggregate, die zur Durchführung der entsprechenden Verfahrensschritte erforderlich sind, müssen in entsprechender Zuordnung übersichtlich angeordnet sein und betrieben werden. Dies setzt einen erheblichen Überwachungsbedarf und entsprechende Erfahrung bei der Bedienung voraus. Es gibt daher vielfältige Bemühungen, solche Systeme in kompakter und übersichtlicher Form zu integrieren und dabei einen hohen Automationsgrad zu gewährleisten.

Aus der WO 95/23549 sind Systeme bekannt, mit denen unter anderem die Bevorratung der flüssigen Substanzen und die automatische Zuführung der Substanz zu einer nachgeschalteten Pumpe möglich ist. Nachteilig bei diesem gattungsgemäßen Gerät ist. daß hierbei ein Nachfüllbeutel mit der flüssigen Substanz bis zu deren endgültigem Verbrauch im Gerät verbleibt und die Pumpe extern angeordnet ist. Darüber hinaus ist für die Pumpe eine sehr komplizierte Mengensteuerung erforderlich, da die Rückführung überschüssiger Substanzmengen bei volumenbestimmter Dosierung sehr schwierig und aufwendig sein würde.

Der Erfindung liegt das technische Problem zugrunde, das gattungsgemäße Gerät so weiterzuentwickeln, daß Nachfüllpackungen nach dem Einfüllen sofort wieder aus dem Gerät entnommen werden können und Vorratsüberwachung und -steuerung bei voller Integration in einem Kompaktgerät möglich ist. Dieses Problem wird dadurch gelöst, daß bei einem gattungsgemäßem Gerät unterhalb des Behälters eine Kammer mit einem Füllstandssensor angeordnet ist, der Behälter und die Kammer dicht zur Vorhaltung der Flüssigkeit ohne Nachfüllbeutel ausgebildet sind und die Pumpe eine im Dosiergerät integrierte Dosierpumpe ist, deren Einlaß mit der Kammer verbunden ist und von der eine Dosierleitung zu einer Verbrauchsstelle außerhalb des Dosiergeräts und eine Rückführleitung zum integriertem Behälter geführt ist.

Das vorgeschlagene Dosiergerät hat den Vorteil, daß durch den Verzicht auf den Verbleib des Nachfüllbeutels im Gerät eine effektivere Leerung des Nachfüllbeutels ermöglicht wird. Außerdem entfallen eine Reihe von Verunreinigungsmöglichkeiten durch den Nachfüllbeutel, da die automatische Öffnung des Beutels zu unkontrollierten Beschädigungen und Flüssigkeitsaustritten führen kann. Weiterhin ist es von großem Vorteil, daß eine Dosierpumpe im Gerät integriert ist. Dies ermöglicht auf der einen Seite, die Rückführmengen in übersichtlicher Weise und auf kurzem Weg direkt in den Vorratsbehälter zurückzubringen und damit der Verwendung wieder zuzuführen. Andererseits wird durch diese kompakte Anordnung, insbesondere durch das Vorsehen des Füllstandssensors, eine klare und übersichtliche Steuerung und Automation ermöglicht.

Da sich nicht ausschließen läßt, daß Fremdkörper in das System gelangen können, beispielsweise durch die unsachgemäße Zerstörung des Nachfüllbeutels oder durch dessen Verschmutzung, ist eine Ausführungsform sehr vorteilhaft, die die Anordnung eines Feinsiebs zwischen Behälter und Pumpe vorsieht. Besonders günstig ist die Anordnung dieses Feinsiebs an der Austrittsöffnung des Behälters.

Ist der Füllstandssensor so ausgebildet, daß er zwischen verschiedenen Füllständen differenzieren kann, ist dies sehr wirkungsvoll einsetzbar für die Anzeige der Betriebsbereitschaft bei normalem Füllstand und zur Signalisierung des Nachfüllbedarfs, wenn ein vorgegebener unterer Füllstand erreicht wird. Zweckmäßig sind hierfür optische und/oder akustische Signalgeber, was die Erfindung in Ausgestaltung vorsieht. Ganz besonders vorteilhaft ist es, wenn bei Erreichen eines minimalen Füllstands das Dosiergerät automatisch abgeschaltet wird, da hierdurch Fehler und möglicherweise Beschädigungen oder Zerstörungen der Dosierpumpe vermieden werden können. Ganz besonders günstig ist für diese Zwecke, wenn der Füllstandssensor als Schwimmerschalter ausgebildet wird.

Besonders vorteilhaft, insbesondere zur Ausschöpfung der durch die Integration gegebenen Möglichkeiten des Dosiergeräts, ist die Ausführungsform, bei der als Dosierpumpe eine Kolbenmembranpumpe eingesetzt wird. Dabei läßt sich in einfacher und günstiger Weise eine stufenlose Dosiersteuerung integrieren.

Die erwähnten und weitere Vorteile werden veranschaulicht bei der Beschreibung eines Ausführungsbeispiels, das in beigefügter Zeichnung dargestellt ist. Darin zeigt
- Fig. 1: das Dosiergerät in geschnittener Seitenansicht und
- Fig. 2: das Dosiergerät in einer um 90 Grad gedrehten Seitenansicht.

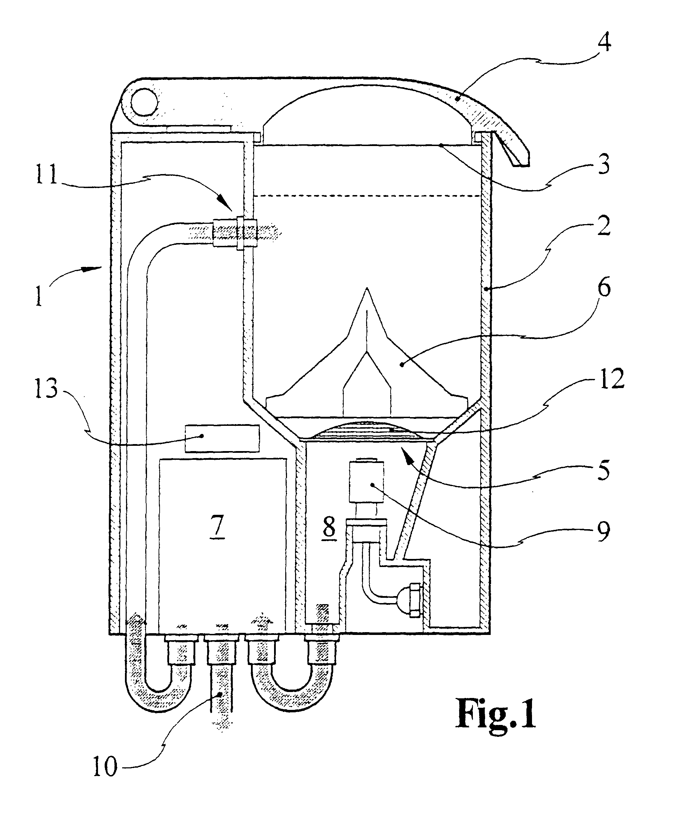

In Fig. 1 ist der Behälter 2 deutlich zu erkennen, dessen im oberen Bereich angeordnete Einfüllöffnung 3 durch einen Deckel 4 verschließbar ist. Im konisch eingezogenen Bodenbereich ist die Austrittsöffnung 5 angeordnet, in der ein Feinsieb 12 befestigt und oberhalb derer eine Vorrichtung aus gekreuzten Messern als Öffnungsvorrichtung 6 angeordnet ist.

Unterhalb der Austrittsöffnung 5 ist eine Kammer 8 angeordnet, in deren unterer Öffnung eine Verbindungsleitung für das zu dosierende Produkt zu der integrierten Dosierpumpe 7 vorhanden ist. Die Dosierpumpe 7 kann beispielsweise als Kolben-Membranpumpe ausgebildet sein, von der eine Produktleitung 10 zur außerhalb des Gerätes befindlichen Verbrauchsstelle vorhanden ist. Im dargestellten Ausführungsbeispiel könnte beispielsweise eine solche Verbrauchsstellle eine gewerbliche Geschirrspülmaschine sein, der auf diese Weise ein Klarspülmittel in den erforderlichen Mengen bedarfsgerecht zugeführt wird. Außerdem geht von der Dosierpumpe 7 eine Rückführleitung 11 zu einer in der seitlichen Behälterwand angeordneten Rückführöffnung.

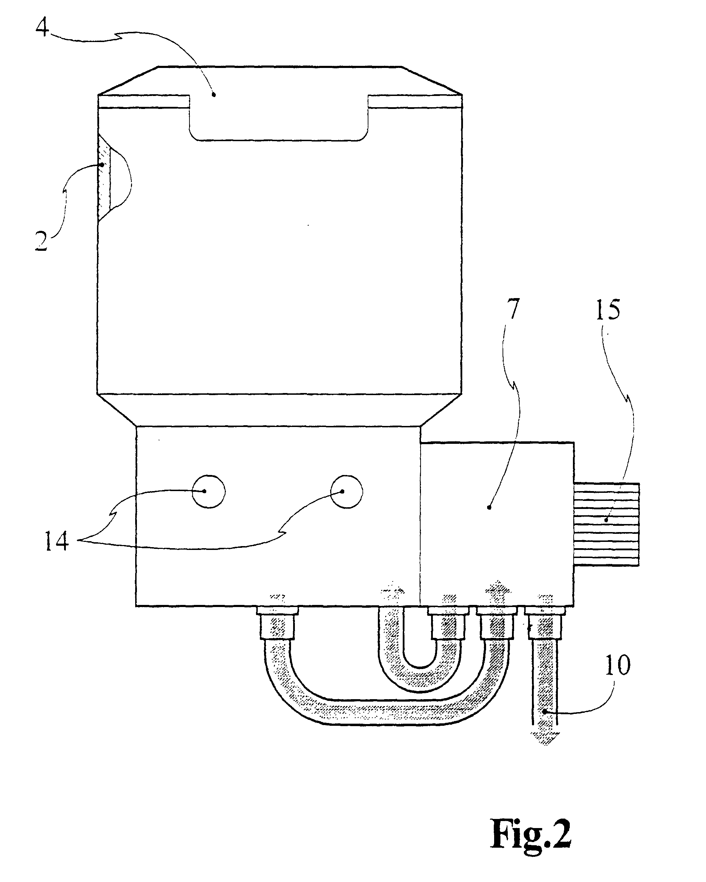

In der Kammer 8 ist ein Füllstandssensor 9 angeordnet, der im skizzierten Ausführungsbeispiel als Schwimmerschalter ausgebildet ist. Dieser Schimmerschalter 9 ermöglicht es, bei normalem Füllstandsniveau Betriebsbereitschaft und bei einem unteren Füllstandsniveau Nachfüllbedarf zu signalisieren. Diese Signale können über akustische Signalgeber 13 oder optische Signalgeber 14 abgegeben werden. Durch einen an der Dosierpumpe 7 vorgesehenen Einstellknopf 15, der in Fig. 2 dargestellt ist, läßt sich stufenlos die Dosiermenge steuern.

Zeigt das Gerät Nachfüllbedarf an, wird der Deckel 4 geöffnet und durch die Einfüllöffnung 3 ein Nachfüllbeutel in das Dosiergerät 1 gebracht, der durch die gekreuzten Messer 6 aufgeschlitz wird. Das Eigengewicht des Nachfüllbeutels reicht aus, um beim Aufsetzen auf die Öffnungsvorrichtung 6 den Beutel aufzuschlitzen. Eine Anordnung gekreuzter Messer 6 in der dargestellten Form führt zu einer Öffnung des Beutelbodens. die nach Form und Göße eine völlige Entleerung des Nachfüllbeutels gewährleistet. Das Herausnehmen des Beutels erfolgt in einer Form, daß gegebenenfalls nach einer Haltephase auch die letzten Reste der Nachfüllflüssigkeit aus dem Beutel heraustropfen können.

Der Inhalt des Behälters 2 hat eine direkte Verbindung mit der unterhalb des Behälters 2 angeordneten Kammer 8, so daß die eingefüllte Flüssigkeit bis zum Boden der Kammer 8 steht. Sollten mit dem Nachfüllbeutel Verunreinigungen in das Gerät gebracht werden oder beim Aufschlitzen des Nachfüllbeutels Teile von diesem abgetrennt werden, wird durch das Feinsieb 12, das im dargestellten Ausführungsbeispiel in der Austrittsöffnung 5 angeordnet ist, vermieden, daß diese in die Kammer gelangen und dort gegebenenfalls zu Verstopfungen von Kanälen und Leitungen oder zur Behinderung des Schwimmerschalters 9 führen können. Insbesondere wird hierdurch verhindert, daß Verunreinigungen oder Fremdkörper zu einer Beeinträchtigung der Pumpenfunktion führen.

Wenn, wie im Ausführungsbeispiel, die Dosierpumpe 7 als Kolbenmembranpumpe ausgebildet ist, läßt sich in sehr einfacher Weise das Dosiervolumen mechanisch stufenlos einstelllen. Die bei einem Membranhub vorgelegt Flüssigkeitsmenge, die über das eingestellte Dosiervolumen hinausgeht, wird über eine zweite Austrittsöffnung in die Rückführleitung 11 geführt. Diese ist mit einer in der Seitenwand des Behälters vorgesehenen Öffnung verbunden, durch die die Rückführmenge direkt in den Vorratsbehälter 2 zurückgebracht wird.

Im unteren Bereich des Dosiergeräts 1 ist auf der dem Pumpenraum gegenüberliegenden Seite Raum vorhanden, in dem Steuerungselektrik und - elektronik angeordent werden kann. Auf diese Weise ist es möglich, die Ein- und Vorrichtungen zur Realisierung der vielfältigen Aufgaben und Funktionen eines solchen integrierten Dosiergerätes auf kleinstem Raum in kompakter Weise, aber trotzdem übersichtlich und einfach zugänglich unterzubringen.

## Patentansprüche

1. Dosiergerät mit einem Behälter (2), der im oberen Bereich eine Einfüllöffnung (3) für Nachfüllbeutel mit einer Flüssigkeit und im Bodenbereich eine Austrittsöffnung (5) aufweist, über der eine Öffnungsvorrichtung (6) für den Nachfüllbeutel angeordnet ist und von der eine Verbindung zu einer nachgeschalteten Pumpe (7) besteht,
**dadurch gekennzeichnet,**
**daß** unterhalb des Behälters (2) eine Kammer (8) mit einem Füllstandssensor (9) angeordnet ist, der Behälter (2) und die Kammer (8) dicht zur Vorhaltung der Flüssigkeit ohne Nachfüllbeutel ausgebildet sind und die Pumpe (7) eine im Dosiergerät (1) integrierte Dosierpumpe (7) ist, deren Einlaß mit der Kammer (8) verbunden ist und von der eine Dosierleitung (10) zu einer Verbrauchsstelle außerhalb des Dosiergeräts (1) und eine Rückführleitung (11) zum integrierten Behälter (2) geführt ist.

2. Dosiergerät nach Anspruch 1,
**dadurch gekennzeichnet,**
**daß** zwischen Behälter (2) und Pumpe (7) ein Feinsieb (12) angeordnet ist.

3. Dosiergerät nach Anspruch 2,
**dadurch gekennzeichnet,**
**daß** das Feinsieb (12) an der Austrittsöffnung (5) angeordnet ist.

4. Dosiergerät nach Anspruch 2 oder 3,
**dadurch gekennzeichnet,**
**daß** bei normalem Füllstand Betriebsbereitschaft und bei unterem Füllstand Nachfüllbedarf signalisierbar ist.

5. Dosiergerät nach Anspruch 4,
**dadurch gekennzeichnet,**
**daß** optische Signalgeber (14) und/oder akustische Signalgeber (13) vorgesehen sind.

6. Dosiergerät nach einem der Ansprüche 1 bis 5,
**dadurch gekennzeichnet,**
**daß** das Dosiergerät (1) bei minimalem Füllstand automatisch ausschaltbar ist.

7. Dosiergerät nach einem der Ansprüche 1 bis 6,
**dadurch gekennzeichnet,**
**daß** der Füllstandssensor (9) ein Schwimmerschalter ist.

8. Dosiergerät nach einem der Ansprüche 1 bis 7,
**dadurch gekennzeichnet,**
**daß** die Dosierpumpe (7) eine Kolbenmembranpumpe ist.

9. Dosiergerät nach Anspruch 8,
**dadurch gekennzeichnet,**
**daß** die Kolbenmembranpumpe (7) eine stufenlose Dosiersteuerung (15) aufweist.

## Claims

1. A dosing unit comprising a container (2) which, in its upper part, has an opening (3) for the introduction of refill bags holding a liquid and, in its base, comprises an outlet opening (5) above which a device (6) for opening the refill bag is disposed and which is connected to a following pump (7), **characterized in that** a chamber (8) with a level sensor (9) is arranged below the storage container (2) and **in that** the container (2) and the chamber (8) are made liquid-tight to hold the liquid without a refill bag and the pump (7) is a dosing pump (7) integrated in the dosing unit (1) of which the inlet is connected to the chamber (8) and from which a dosing line (10) leads to a user outside the dosing unit (1) and a return line (11) leads back to the integrated container (2).

2. A dosing unit as claimed in claim 1, **characterized in that** a fine-mesh sieve (12) is arranged between the container (2) and the pump (7).

3. A dosing unit as claimed in claim 2, **characterized in that** the fine-mesh sieve (12) is disposed in the outlet opening (5).

4. A dosing unit as claimed in claim 2 or 3, **characterized in that** ready and refill signals are generated at normal and low filling levels.

5. A dosing unit as claimed in claim 4, **characterized in that** optical signal generators (14) and/or acoustic signal generators (13) are provided.

6. A dosing unit as claimed in any of claims 1 to 5, **characterized in that** the dosing unit (1) is automatically switched off when the filling level is minimal.

7. A dosing unit as claimed in any of claims 1 to 6, **characterized in that** the level sensor (9) is a float switch.

8. A dosing unit as claimed in any of claims 1 to 7, **characterized in that** the dosing pump (7) is a piston diaphragm pump.

9. A dosing unit as claimed in claim 8, **characterized in that** the piston diaphragm pump (7) has a stepless dosing control mechanism.

## Revendications

1. Appareil de dosage avec un réservoir (2), qui présente à la partie supérieure une ouverture de remplissage (3) pour un sachet de recharge contenant un liquide et dans le fond une ouverture de sortie (5), au-dessus de laquelle est placé un dispositif d'ouverture (6) pour le sachet de recharge et depuis laquelle existe une connexion vers une pompe (7) située en aval, **caractérisé en ce qu'**une chambre (8) avec un capteur de niveau de remplissage (9) est disposée en dessous du réservoir (2), le réservoir (2) et la chambre (8) sont conçus étanches pour retenir le liquide sans sachet de recharge et la pompe (7) est une pompe de dosage (7) intégrée dans l'appareil de dosage (1), dont l'entrée est reliée à la chambre (8) et de laquelle une tuyauterie de dosage (10) conduit à un point de consommation en dehors de l'appareil de dosage (1) et une tuyauterie de recyclage (11) vers le réservoir (2) intégré.

2. Appareil de dosage suivant la revendication 1, **caractérisé en ce qu'**un tamis fin (12) est disposé entre le réservoir (2) et la pompe (7).

3. Appareil de dosage suivant la revendication 2, **caractérisé en ce que** le tamis fin (12) est disposé à l'ouverture de sortie (5).

4. Appareil de dosage suivant la revendication 2 ou 3, **caractérisé en ce que**, pour un niveau de remplissage normal, on peut signaler la disponibilité à l'utilisation et, pour un niveau de remplissage inférieur, le besoin d'une recharge.

5. Appareil de dosage suivant la revendication 4, **caractérisé en ce que** des transmetteurs de signaux optiques (14) et/ou acoustiques (13) sont prévus.

6. Appareil de dosage suivant l'une des revendications 1 à 5, **caractérisé en ce que** l'appareil de dosage (1) peut être automatiquement mis hors service pour un niveau de remplissage minimal.

7. Appareil de dosage suivant l'une des revendications 1 à 6, **caractérisé en ce que** le capteur de niveau de remplissage (9) est un commutateur à flotteur.

8. Appareil de dosage suivant l'une des revendications 1 à 7, **caractérisé en ce que** la pompe de dosage (7) est une pompe à membrane à piston.

9. Appareil de dosage suivant la revendication 8, **caractérisé en ce que** la pompe à membrane à piston (7) présente une commande de dosage en continu (15).
